# EUROPÄISCHE PATENTSCHRIFT

(11) **EP 3 945 159 B1**
(45) Veröffentlichungstag und Bekanntmachung des Hinweises auf die Patenterteilung: **27.03.2024**
(21) Anmeldenummer: 20188392.3
(22) Anmeldetag: 29.07.2020
(51) Int. Cl.: E01C 19/48

(54) **SCHALTEINRICHTUNG FÜR EINE ELEKTRISCHE BOHLEN-HEIZEINRICHTUNG EINES STRASSENFERTIGERS**
SWITCHING DEVICE FOR AN ELECTRIC SLAB HEATING DEVICE OF A ROAD FINISHER
DISPOSITIF DE COMMUTATION POUR UN DISPOSITIF DE CHAUFFAGE ÉLECTRIQUE À MADRIER D'UNE FINISSEUSE ROUTIÈRE

(43) Veröffentlichungstag der Anmeldung: 02.02.2022
(73) Patentinhaber: Joseph Vögele AG, 67067 Ludwigshafen (DE)
(72) Erfinder: HEINDTEL, Michael, 68199 Mannheim (DE); EUL, Achim, 68305 Mannheim (DE)
(74) Vertreter: Grünecker Patent- und Rechtsanwälte PartG mbB

(56) Entgegenhaltungen:
- EP-B1- 1 036 883
- DE-A1-102015 012 298
- JP-A- 2015 094 132
- US-A1- 2015 037 097

## Beschreibung

Die Erfindung betrifft das elektrische Beheizen einer Einbaubohle eines Straßenfertigers.

Bekannte Straßenfertiger umfassen bezüglich einer Einbaufahrtrichtung vorne am Zugfahrzeug des Straßenfertigers einen Gutbunker zur Aufnahme von Einbaugut. Von dem Gutbunker wird das Einbaugut während des Einbaus über eine Längsfördereinrichtung in einen hinteren Bereich des Straßenfertigers gefördert. Dort wird das Einbaugut mittels einer Verteilerschnecke quer zur Einbaufahrtrichtung verteilt und so gleichmäßig einer von dem Zugfahrzeug gezogenen Einbaubohle zum Verdichten des Einbauguts vorgelegt. Es ist bekannt, Arbeitskomponenten der Einbaubohle, wie beispielsweise Tamperleisten, Glättbleche und/oder Pressleisten, elektrisch oder mit Gas zu beheizen, um ein Ankleben des heißen Einbaumaterials zu verhindern. Im Falle einer elektrischen Beheizung sind in der Einbaubohle Widerstandsheizelemente verteilt, die über einen an dem Zugfahrzeug vorgesehenen Generator mit elektrischer Leistung versorgt werden.

In der EP 1 036 883 B1 wurde erkannt, dass ein permanentes Betreiben der elektrischen Heizelemente der Einbaubohle mit voller Leistung den Generator bei ungünstigen Betriebsbedingungen stark belastet und zudem eine geringe Energieeffizienz aufweisen kann. Um diese Probleme zu lösen, wird eine getaktete Schaltung der elektrischen Heizelemente der Einbaubohle vorgeschlagen. Von einem an dem Zugfahrzeug vorgesehenen Generator führen Versorgungsstränge zu den auf den beiden Bohlenhälften (linke und rechte Bohlenhälfte) der Einbaubohle integrierten elektrischen Heizelementen. In den Versorgungssträngen sind Schütze vorgesehen, so dass jeder Bohlenhälfte ein Schütz zugeordnet ist. Mittels temperaturabhängiger Widerstände in den Wicklungen des Generators wird die Temperatur des Generators überwacht. Wenn die Temperatur des Generators einen bestimmten Schwellenwert überschreitet, wird der Betrieb der Heizelemente der Einbaubohle auf einen getakteten Betrieb umgestellt. Dies bedeutet, dass beispielsweise die Heizelemente der linken Bohlenhälfte über eine vorbestimmte Zeitdauer, z. B. 30 Sekunden, abgeschaltet werden und nur die Heizelemente in der rechten Bohlenhälfte eingeschaltet bleiben. Nach Verstreichen der vorbestimmten Zeitdauer werden die Heizelemente der rechten Bohlenhälfte abgeschaltet und die Heizelemente der linken Bohlenhälfte wieder eingeschaltet. Dies wird permanent wiederholt, wodurch sich der Generator wieder abkühlen kann.

Aus der EP 1 295 990 B2 ist ein Straßenfertiger bekannt, welcher eine Einbaubohle mit einem Grundbohlenteil und beidseitig davon vorgesehenen Erweiterungsteilen zur Vergrößerung der Einbaubreite aufweist. Die Einbaubohle ist in vier Sektionen unterteilt. In jeder der Sektionen sind vier Widerstandsheizelemente zum Beheizen der jeweiligen Bohlensektion vorgesehen. Die Heizelemente sind über Relaisschalter zur Energieversorgung mit einem Generator des Straßenfertigers verbunden, wobei jeweils ein gemeinsamer Relaisschalter zwei nebeneinanderliegenden Heizelementen vorgeschaltet ist. Mittels einer Steuereinrichtung werden die zu den Heizelementen einer Sektion korrespondierenden Relaisschalter zur Versorgung der Heizelemente geschlossen, wenn eine an der Sektion gemessene Temperatur unter einem ersten Schwellenwert liegt. Überschreitet die gemessene Temperatur einen höheren, zweiten Schwellenwert, werden die zugeordneten Relaisschalter wieder geöffnet, um die Beheizung der Sektion zu unterbrechen. Hierdurch sollen die Bohlensektionen in einem geeigneten Temperaturfenster gehalten werden.

Aus der EP 3 527 721 A1 ist ein Straßenfertiger bekannt, an dessen Einbaubohle eine Mehrzahl von elektrischen Heizeinrichtungen vorgesehen ist. Die elektrischen Heizeinrichtungen werden mittels einer Stromverteilungsanordnung mit von einem Generator bereitgestellter elektrischer Leistung versorgt. Die Stromverteilungsanordnung umfasst eine Mehrzahl von an der Einbaubohle vorgesehenen Leistungsanpassern. Es ist jeweils ein Leistungsanpasser einer korrespondierenden elektrischen Heizeinrichtung zugeordnet. Die Leistungsanpasser werden dazu angesteuert, die der jeweils zugeordneten elektrischen Heizeinrichtung zugeführte Leistung individuell dynamisch einzustellen. Die Leistungsanpasser können beispielsweise Thyristorsteller umfassen. Aufgrund von Wärmeentwicklung in den Leistungsstellern im Betrieb muss sichergestellt werden, dass die Leistungssteller für die Nennleistung der Heizeinrichtungen ausgelegt sind, was insbesondere bei größeren Nennleistungen zu hohen Kosten führen kann.

Es ist Aufgabe der Erfindung, mit möglichst einfachen Mitteln eine wirtschaftliche und wartungsarme Leistungsversorgung für eine elektrische Einbaubohlenheizung bereitzustellen.

Diese Aufgabe wird durch einen Straßenfertiger gemäß Anspruch 1 und durch ein Verfahren zum Beheizen einer Einbaubohle eines Straßenfertigers gemäß Anspruch 11 gelöst. Die abhängigen Ansprüche geben vorteilhafte Ausführungsformen der Erfindung an.

Ein erfindungsgemäßer Straßenfertiger umfasst ein Zugfahrzeug mit einem Gutbunker zur Aufnahme von Einbaugut und eine Einbaubohle zum Verdichten von Einbaugut. Die Einbaubohle umfasst zumindest eine elektrische Heizeinrichtung zum Beheizen der Einbaubohle. Der Straßenfertiger umfasst zumindest eine elektrische Schalteinrichtung, welche dazu konfiguriert ist, eine elektrische Leistungszufuhr der elektrischen Heizeinrichtung zu schalten. Die elektrische Schalteinrichtung umfasst eine elektrische Parallelschaltung zweier Schaltgeräte. Die elektrische Parallelschaltung der zwei Schaltgeräte bildet mit der elektrischen Heizeinrichtung eine elektrische Reihenschaltung.

Da die beiden Schaltgeräte parallel geschaltet sind, kann die elektrische Heizeinrichtung auch dann mit elektrischer Leistung versorgt werden, wenn eines der Schaltgerät keinen Stromfluss zulässt. Es ist somit nicht erforderlich, dass beide Schaltgeräte während eines Betriebs der Heizeinrichtung permanent von Strom durchflossen werden. Wenn die Schaltgeräte während des Betriebs der elektrischen Heizeinrichtung nicht permanent stromführend sein müssen, können Schaltgeräte mit einem geringeren Nennstrom (bezogen auf einen Dauerbetrieb) verwendet werden. Wenn die Schaltgeräte während des Betriebs der elektrischen Heizeinrichtung nicht permanent stromführend sein müssen, lässt sich eine Erwärmung der Schaltgeräte im Betrieb verringern. Durch das Verwenden zweier "kleiner" dimensionierter Schaltgeräte kann gegenüber dem Einsatz eines "größeren" Schaltgeräts eine Kostenersparnis erreicht werden. Da die elektrische Parallelschaltung der beiden Schaltgeräte mit der elektrischen Heizeinrichtung eine elektrische Reihenschaltung bildet, kann die elektrische Heizeinrichtung auf die gleiche Art und Weise betrieben werden, unabhängig davon, durch welches der beiden Schaltgeräte ein Stromfluss vorliegt.

Die beiden Schaltgeräte können dazu konfiguriert sein, die elektrische Heizeinrichtung abwechselnd mit elektrischer Leistung zu versorgen. Beispielsweise können die beiden Schaltgeräte von einer Steuereinheit des Straßenfertigers dazu angesteuert werden, die elektrische Heizeinrichtung abwechselnd mit elektrischer Leistung zu versorgen. Beim abwechselnden Versorgen der elektrischen Heizeinrichtung durch die beiden Schaltgeräte können die beiden Schaltgeräte abwechselnd stromführend und stromsperrend sein. Heizt sich eines der Schaltgeräte in einer stromführenden Phase auf, kann es in der darauffolgenden stromsperrenden Phase zumindest zu einem gewissen Grad abkühlen, ohne dass der Betrieb der elektrischen Heizeinrichtung beendet, unterbrochen und/oder beeinträchtigt wird. Hierdurch kann einer Beschädigung der Schaltgeräte durch Überhitzung entgegengewirkt werden.

Die beiden Schaltgeräte können mit einem gemeinsamen Eingang der elektrischen Heizeinrichtung verbunden sein. Die elektrische Schalteinrichtung mit den beiden parallel zueinander geschalteten Schaltgeräten kann mit einer gewöhnlichen elektrischen Heizeinrichtung mit nur einem Eingang verwendet werden. Der Betrieb der elektrischen Heizeinrichtung kann unabhängig davon sein, über welches der beiden Schaltgeräte eine Stromversorgung erfolgt.

Die elektrische Schalteinrichtung kann an der Einbaubohle vorgesehen sein. Ein Vorsehen der elektrischen Schalteinrichtung an der Einbaubohle ist besonders vorteilhaft, wenn an der Einbaubohle mehrere elektrische Heizeinrichtungen zum Beheizen der Einbaubohle vorgesehen sind, denen jeweils eine elektrische Schalteinrichtung zugeordnet ist. Durch das Vorsehen der Schalteinrichtungen an der Einbaubohle lässt sich ein elektrisches Anschließen der Einbaubohle an dem Zugfahrzeug vereinfachen.

Die beiden Schaltgeräte können Halbleiter-Schaltgeräte sein. Da Halbleiter-Schaltgeräte vergleichsweise temperaturempfindlich sind, ist das durch das Parallelschalten zweier Schaltgeräte zum Versorgen einer elektrischen Heizeinrichtung erreichte Vermeiden einer Erhitzung besonders relevant. Die Halbleiter-Schaltgeräte können dazu konfiguriert sein, eine der elektrischen Heizeinrichtung zugeführte elektrische Leistung variabel einzustellen.

Die beiden Schaltgeräte können jeweils einen Transistor umfassen oder als ein Transistor ausgebildet sein. Insbesondere können die beiden Schaltgeräte jeweils einen Bipolartransistor umfassen oder als ein Bipolartransistor ausgebildet sein. Insbesondere können die beiden Schaltgeräte jeweils einen Bipolartransistor mit isolierter Gate-Elektrode (IGBT) umfassen oder als ein Bipolartransistor mit isolierter Gate-Elektrode (IGBT) ausgebildet sein. Insbesondere können die beiden Schaltgeräte jeweils einen Feldeffekttransistor umfassen oder als ein Feldeffekttransistor ausgebildet sein. Die beiden Schaltgeräte können jeweils einen Thyristor umfassen oder als ein Thyristor ausgebildet sein. Insbesondere können die beiden Schaltgeräte jeweils einen Gate Turn-Off Thyristor (GTO) umfassen oder als ein Gate Turn-Off Thyristor (GTO) ausgebildet sein. Die beiden Schaltgeräte können jeweils eine Zweirichtungs-Thyristordiode (TRIAC) umfassen oder als eine Zweirichtungs-Thyristordiode (TRIAC) ausgebildet sein.

Die elektrische Schalteinrichtung kann dazu konfiguriert sein, die elektrische Heizeinrichtung mit einer Wechselspannung zu versorgen. Die elektrische Wechselspannung kann von einem Generator des Straßenfertigers zur Verfügung gestellt werden.

Jedes der beiden Schaltgeräte kann dazu konfiguriert sein, zumindest eine komplette Sinuswelle der Wechselspannung am Stück passieren zu lassen. Jedes der beiden Schaltgeräte kann dazu konfiguriert sein, zumindest für eine begrenzte Zeit, die elektrische Heizeinrichtung auch allein (ohne das andere Schaltgerät) zu betreiben. Jedes der beiden Schaltgeräte kann dazu konfiguriert sein, weniger als 100, weniger als 80, weniger als 50, weniger als 40, weniger als 20, weniger als zehn, weniger als fünf oder weniger als zwei komplette Sinuswellen der Wechselspannung am Stück passieren zu lassen. Jedes der beiden Schaltgeräte kann dazu konfiguriert sein, zumindest eine, zumindest zwei, zumindest fünf, zumindest zehn oder zumindest 20 komplette Sinuswellen der Wechselspannung am Stück passieren zu lassen. Durch ein Begrenzen der Dauer des Stromflusses durch ein einzelnes Schaltgerät lässt sich ein Erhitzen des Schaltgeräts wirksam begrenzen.

Die beiden Schaltgeräte können dazu konfiguriert sein, aufeinanderfolgende Sinuswellen der Wechselspannung abwechselnd passieren zu lassen.

Die elektrische Heizeinrichtung kann ein Widerstandselement sein. Die elektrische Heizeinrichtung kann ein Heizstab sein.

Die Erfindung betrifft auch ein Verfahren zum Beheizen einer Einbaubohle eines Straßenfertigers. Das Verfahren umfasst das Versorgen zumindest eines an der Einbaubohle vorgesehenen elektrischen Widerstandsheizelements mit elektrischer Leistung. Eine elektrische Leistungszufuhr zu dem elektrischen Widerstandsheizelement wird mit einer elektrischen Schalteinrichtung geschaltet. Die elektrische Schalteinrichtung umfasst zwei Schaltgeräte. Die zwei Schaltgeräte der elektrischen Schalteinrichtung versorgen das elektrische Widerstandsheizelement abwechselnd mit elektrischer Leistung.

Wenn die beiden Schaltgeräte der elektrischen Schalteinrichtung das elektrische Widerstandsheizelement abwechselnd mit elektrischer Leistung versorgen, kann eines der beiden Schaltgeräte ohne Stromfluss sein, während das andere Schaltgerät stromführend ist. Das Schaltgerät ohne Stromfluss hat Gelegenheit, sich abzukühlen, während das elektrische Widerstandsheizelement von dem anderen Schaltgerät versorgt wird.

Das elektrische Widerstandsheizelement kann mit einer Wechselspannung versorgt werden.

Eine Frequenz des Umschaltens der Versorgung des elektrischen Widerstandsheizelements zwischen den beiden Schaltgeräten kann einer Frequenz der elektrischen Wechselspannung entsprechen. Eine Frequenz des Umschaltens der Versorgung des elektrischen Widerstandsheizelements zwischen den beiden Schaltgeräten kann kleiner sein als eine Frequenz der elektrischen Wechselspannung.

Das elektrische Widerstandsheizelement kann während der abwechselnden Stromversorgung durch die beiden elektrischen Schaltgeräte durchgängig mit elektrischer Leistung versorgt werden.

Es können zwei alternierend geschaltete Schaltgeräte in einer elektrischen Schalteinrichtung zur elektrischen Leistungsversorgung einer elektrischen Heizeinrichtung an einer Einbaubohle eines Straßenfertigers verwendet werden, um eine Überhitzungsgefahr der elektrischen Schalteinrichtung zu verringern.

Dadurch, dass die beiden Schaltgeräte alternierend geschaltet sind, kann sich eines der beiden Schaltgeräte abkühlen, während das andere Schaltgerät die elektrische Heizeinrichtung mit Leistung versorgt.

Wie beschrieben, stellt die Erfindung gemäß einem Aspekt einen Straßenfertiger und gemäß einem anderen Aspekt ein Verfahren zum Beheizen einer Einbaubohle eines Straßenfertigers bereit. Merkmale, Vorteile und Erläuterungen, die bezüglich eines dieser Aspekte beschrieben sind, lassen sich auf den anderen Aspekt übertragen.

Im Folgenden wird die Erfindung anhand eines Ausführungsbeispiels weiter erläutert. Dabei zeigt
- Fig. 1: eine schematische Seitenansicht eines Straßenfertigers gemäß einer Ausführungsform;
- Fig. 2: eine schematische Draufsicht auf einen Straßenfertiger gemäß einer Ausführungsform; und
- Fig. 3: eine schematische Darstellung der abwechselnden Versorgung der elektrischen Heizeinrichtung durch zwei parallel zueinander geschaltete Schaltgeräte gemäß einer Ausführungsform.

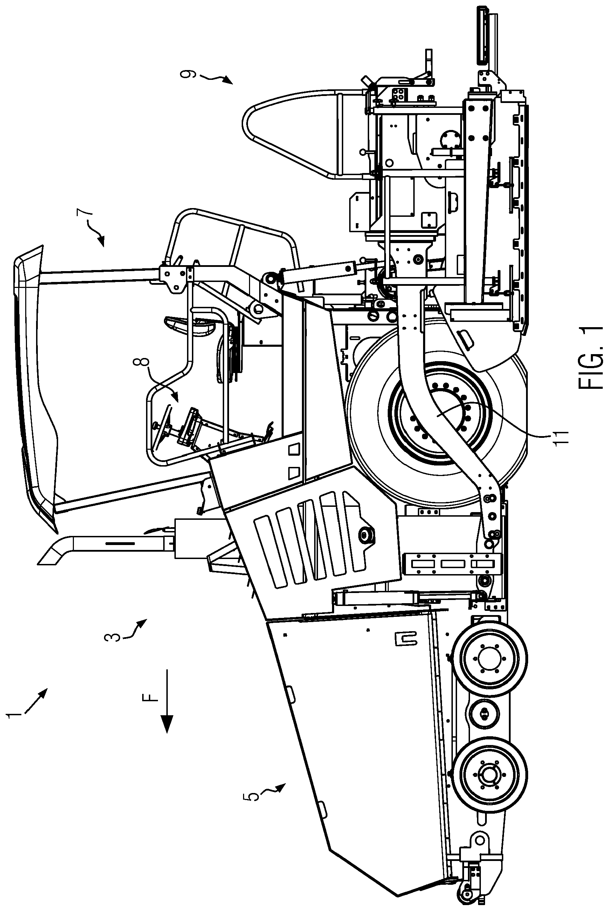

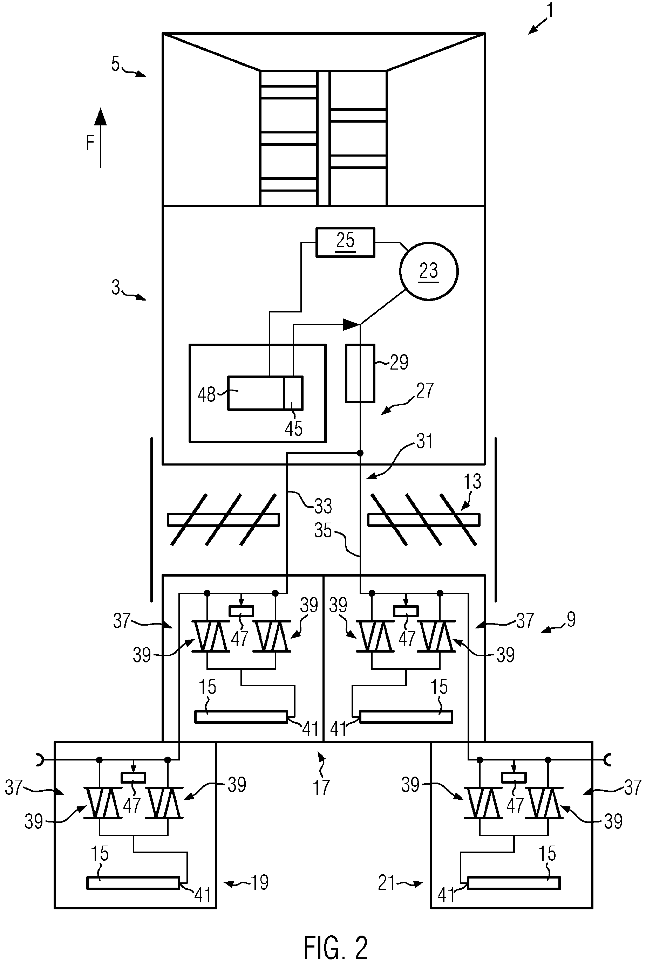

Fig. 1 zeigt in schematischer Seitenansicht einen Straßenfertiger 1 gemäß einer Ausführungsform. Der Straßenfertiger 1 umfasst ein selbstfahrendes Zugfahrzeug 3 mit einem in Einbaufahrtrichtung F vorne liegenden Gutbunker 5 zur Aufnahme von Einbaugut. An dem Zugfahrzeug 3 ist zudem ein Bedienstand 7 vorgesehen, welcher Eingabeeinrichtungen 8 zum Steuern des Straßenfertigers 1 umfasst sowie Platz für eine Bedienperson bereitstellt. Eine Einbaubohle 9 zum Verdichten von Einbaugut wird über beidseitig an dem Zugfahrzeug 3 angebrachte Zugholme 11 hinter dem Zugfahrzeug 3 hergezogen. An dem Zugfahrzeug 3 ist eine Fördereinrichtung zum Fördern von Einbaugut von dem Gutbunker 5 in einen hinteren Bereich des Straßenfertigers 1 vorgesehen. Im hinteren Bereich des Straßenfertigers 1 verlässt das
Einbaugut die Fördereinrichtung durch einen Materialauslass und gelangt zu einer Verteilerschnecke 13 (siehe Fig. 2) zum Verteilen des Einbauguts vor der Einbaubohle 9 quer zur Einbaufahrtrichtung F.

Wie in Fig. 2 dargestellt, ist an der Einbaubohle 9 ist eine Mehrzahl von elektrischen Heizeinrichtungen 15 zum elektrischen Beheizen der Einbaubohle 9 vorgesehen. Bei den Heizeinrichtungen 15 kann es sich um Widerstandsheizelemente handeln, insbesondere um Heizstäbe. Die Heizeinrichtungen 15 können dazu ausgelegt sein, die Einbaubohle 9 im Wesentlichen auf die Temperatur des heißen Einbauguts zu heizen, um ein Ankleben des Einbauguts an der Einbaubohle 9 zu vermeiden. In der dargestellten Ausführungsform handelt es sich bei der Einbaubohle 9 um eine Ausziehbohle mit einer Grundbohle 17 und bezüglich der Einbaufahrtrichtung F lateral beidseitig daran angebrachten Ausziehteilen 19, 21, die zum Anpassen der Einbaubreite ein- und ausgefahren werden können. Es wäre aber auch denkbar, dass die Einbaubohle 9 lediglich die Grundbohle 17 umfasst, ohne dass Ausziehteile 19, 21 vorgesehen sind. Sowohl an der Grundbohle 17 als auch an den Ausziehteilen 19, 21 können elektrische Heizeinrichtungen 15 vorgesehen sein.

An dem Zugfahrzeug 3 ist ein Generator 23 vorgesehen, welcher von einem Motor 25, insbesondere einem Dieselmotor, des Zugfahrzeugs 3 angetrieben wird und elektrische Leistung bereitstellt. Die elektrische Leistung von dem Generator 23 wird unter anderem zur Versorgung der elektrischen Heizeinrichtungen 15 verwendet. Eine Stromversorgungsanordnung 27 verbindet den Generator 23 mit den elektrischen Heizeinrichtungen 15 auf der Einbaubohle 9, um die elektrischen Heizeinrichtungen 15 mit elektrischer Leistung zu versorgen. Die Stromversorgungsanordnung 27 umfasst an dem Zugfahrzeug 3 eine Hauptsicherung 29. Ein Leitungsnetz 31 der Stromversorgungsanordnung 27 führt von dem Generator 23 über die Hauptsicherung 29 auf die Einbaubohle 9. In der gezeigten Ausführungsform verzweigt sich das Leitungsnetz 31 auf dem Zugfahrzeug 3 in zwei Stränge 33, 35, welche auf die Einbaubohle 9 geführt werden und dort eine linke Bohlenhälfte bzw. eine rechte Bohlenhälfte versorgen. Auf der Einbaubohle 9 verzweigt das Leitungsnetz 31 weiter, um die einzelnen elektrischen Heizeinrichtungen 15 zu versorgen.

Jeder der elektrischen Heizeinrichtungen 15 ist eine elektrische Schalteinrichtung 37 zugeordnet. Die elektrischen Schalteinrichtungen 37 sind jeweils mit der korrespondierenden elektrischen Heizeinrichtung 15 elektrisch in Reihe geschaltet. In der dargestellten Ausführungsform liegen vier elektrische Schalteinrichtungen 37 vor, welche zu den vier dargestellten elektrischen Heizeinrichtungen 15 korrespondieren. Die elektrischen Schalteinrichtungen 37 sind jeweils der korrespondierenden elektrischen Heizeinrichtung 15 vorgeschaltet. Die Reihenschaltungen aus den elektrischen Schalteinrichtungen 37 und den jeweils korrespondierenden elektrischen Heizeinrichtungen 15 können zueinander parallel geschaltet sein. Es wäre aber auch denkbar, dass die Reihenschaltungen aus den elektrischen Schalteinrichtungen 37 und den zugeordneten elektrischen Heizeinrichtungen 15 unabhängig voneinander vorliegen, beispielsweise in unterschiedlichen Stromkreisen.

Die elektrischen Schalteinrichtungen 37 umfassen jeweils zwei zueinander elektrisch parallel geschaltete Schaltgeräte 39. Die elektrische Parallelschaltung der beiden Schaltgeräte 39 einer elektrischen Schalteinrichtung 37 ist jeweils mit der zugeordneten elektrischen Heizeinrichtung 15 in Reihe geschaltet. Die zugeordnete elektrische Heizeinrichtung 15 umfasst einen gemeinsamen Eingang 41, über den sie mit beiden Schaltgeräten 39 der zugehörigen elektrischen Schalteinrichtung 37 verbunden ist. Jedes Schaltgerät 39 kann in einen stromführenden Zustand versetzt werden, in welchem ein Strom durch das Schaltgerät 39 fließt, welcher die zugehörige elektrische Heizeinrichtung 15 mit elektrischer Leistung versorgt. Jedes Schaltgerät 39 kann in einen nicht-stromführenden oder sperrenden Zustand versetzt werden, in welchem ein Stromfluss durch die elektrische Schalteinrichtung 39 hindurch zu der elektrischen Heizeinrichtung 15 unterbunden ist.

Die beiden Schaltgeräte können beispielsweise jeweils einen Transistor umfassen oder als ein Transistor ausgebildet sein. Insbesondere können die beiden Schaltgeräte jeweils einen Bipolartransistor umfassen oder als ein Bipolartransistor ausgebildet sein. Insbesondere können die beiden Schaltgeräte jeweils einen Bipolartransistor mit isolierter Gate-Elektrode (IGBT) umfassen oder als ein Bipolartransistor mit isolierter Gate-Elektrode (IGBT) ausgebildet sein. Insbesondere können die beiden Schaltgeräte jeweils einen Feldeffekttransistor umfassen oder als ein Feldeffekttransistor ausgebildet sein. Die beiden Schaltgeräte können beispielsweise jeweils einen Thyristor umfassen oder als ein Thyristor ausgebildet sein. Insbesondere können die beiden Schaltgeräte jeweils einen Gate Turn-Off Thyristor (GTO) umfassen oder als ein Gate Turn-Off Thyristor (GTO) ausgebildet sein. Die beiden Schaltgeräte können beispielsweise jeweils eine Zweirichtungs-Thyristordiode (TRIAC) umfassen oder als eine Zweirichtungs-Thyristordiode (TRIAC) ausgebildet sein.

Der Betrieb der elektrischen Schalteinrichtungen 37 wird durch eine Steuerung 48 gesteuert. In der gezeigten Ausführungsform wird der Betrieb der elektrischen Schalteinrichtungen 37 durch eine an dem Zugfahrzeug 3 vorgesehene Steuerung 48 gesteuert. Die Steuerung 48 könnte aber auch teilweise oder vollständig an der Einbaubohle 9 vorgesehen sein. In der dargestellten Ausführungsform umfasst die Steuerung 48 ein Kommunikationsmodul 45, welches mit Kommunikationsmodulen 47 der elektrischen Schalteinrichtungen 37 in einer Datenaustauschverbindung steht. In der dargestellten Ausführungsform ist die Datenaustauschverbindung zwischen der Steuerung 48 und den elektrischen Schalteinrichtungen 37 als Powerline-Kommunikation auf das Leitungsnetz 31 aufgeschaltet. Die Datenaustauschverbindung könnte aber auch anderweitig realisiert sein, beispielsweise durch drahtlose oder drahtgebundene Datenübertragung. Die Kommunikationsmodule 47 können mit den Schaltgeräten 39 verbunden sein, um diese anzusteuern. Die Kommunikationsmodule 47 können direkt oder über Zwischenelemente, wie z.B. Unter-Steuerungen, mit den Schaltgeräten 39 verbunden sein. Alternativ wäre es denkbar, dass die Schaltgeräte 39 direkt (ohne zwischengeschaltete Kommunikationsmodule 47) mit der Steuerung 48 oder einer Unter-Steuerung verbunden sind. Die Schaltgeräte 39 können beispielsweise über einen Gate-Anschluss angesteuert werden.

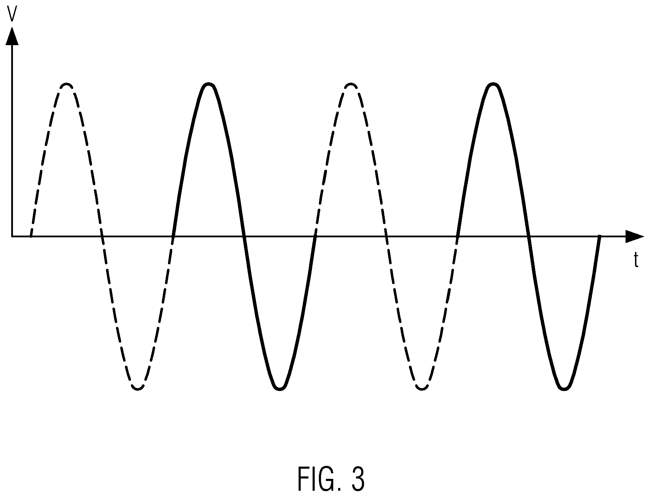

Die beiden Schaltgeräte 39 einer elektrischen Schalteinrichtung 37 werden derart angesteuert, dass sie die korrespondierende elektrische Heizeinrichtung 15 abwechselnd mit elektrischer Leistung versorgen. Vorzugsweise ist im Betrieb immer eines der beiden Schaltgeräte 39 in einem sperrenden Zustand und das andere der beiden Schaltgeräte in einem stromführenden Zustand zur elektrischen Versorgung der zugeordneten elektrischen Heizeinrichtung 15. Es sind unterschiedliche Taktungen für das Umschalten zwischen den beiden Schaltgeräten 39 einer elektrischen Schalteinrichtung 37 denkbar. Wenn die elektrischen Heizeinrichtungen 15 mit einer Wechselspannung versorgt werden, kann beispielsweise derart zwischen den beiden Schaltgeräten 39 einer elektrischen Schalteinrichtung 37 umgeschaltet werden, dass eine vollständige Sinuswelle der Wechselspannung von einem der Schaltgeräte 39 an die elektrische Heizeinrichtung 15 weitergegeben wird und die vollständige darauffolgende Sinuswelle dann von dem anderen Schaltgerät 39 an die elektrische Heizeinrichtung 15 weitergegeben wird und so weiter. Dieser Fall ist in Fig. 3 dargestellt, welche einen Zeitverlauf einer Spannung an dem Eingang 41 einer elektrischen Heizeinrichtung 15 zeigt. Die Zeitspannen, in denen die Leistungsversorgung der elektrischen Heizeinrichtung 15 über ein erstes Schaltgerät 39 der korrespondierenden elektrischen Schalteinrichtung 37 erfolgt, sind in Fig. 3 gestrichelt dargestellt. Das zweite Schaltgerät 39 ist in den entsprechenden Zeitintervallen sperrend. Die Zeitintervalle, in denen die Stromversorgung der elektrischen Heizeinrichtung 15 über das zweite Schaltgerät 39 der elektrischen Schalteinrichtung 37 erfolgt, sind in Fig. 3 durchgezogen dargestellt. In diesen Zeitintervallen ist das erste Schaltgerät 39 sperrend.

Es ist nicht zwingend erforderlich, dass die Taktung der beiden Schaltgeräte 39 einer elektrischen Schalteinrichtung 37 der in Fig. 3 dargestellten Situation entspricht. Prinzipiell kann die Zeitaufteilung zwischen einer Versorgung der elektrischen Heizeinrichtung 15 durch das erste Schaltgerät 39 und einer Versorgung der elektrischen Heizeinrichtung 15 durch das zweite Schaltgerät 39 beliebig gewählt werden. Vorzugsweise liegt eine Frequenz des Umschaltens der Versorgung der elektrischen Heizeinrichtung 15 zwischen den beiden Schaltgeräten 39 im Bereich einer Frequenz der elektrischen Wechselspannung. Es wäre beispielsweise auch denkbar, dass die Schaltgeräte 39 jeweils mehr als eine vollständige Sinuswelle der Wechselspannung passieren lassen und erst dann auf das andere Schaltgerät 39 umgeschaltet wird.

## Patentansprüche

1. Straßenfertiger (1), umfassend:
ein Zugfahrzeug (3) mit einem Gutbunker (5) zur Aufnahme von Einbaugut; und
eine Einbaubohle (9) zum Verdichten von Einbaugut,
wobei die Einbaubohle (9) zumindest eine elektrische Heizeinrichtung (15) zum Beheizen der Einbaubohle (9) umfasst, und
wobei der Straßenfertiger (1) zumindest eine elektrische Schalteinrichtung (37) umfasst, welche dazu konfiguriert ist, eine elektrische Leistungszufuhr der elektrischen Heizeinrichtung (15) zu schalten,
**dadurch gekennzeichnet, dass**
die elektrische Schalteinrichtung (37) eine elektrische Parallelschaltung zweier Schaltgeräte (39) umfasst, wobei die elektrische Parallelschaltung der zwei Schaltgeräte (39) mit der elektrischen Heizeinrichtung (15) eine elektrische Reihenschaltung bildet.

2. Straßenfertiger nach Anspruch 1, wobei die beiden Schaltgeräte (39) dazu konfiguriert sind, die elektrische Heizeinrichtung (15) abwechselnd mit elektrischer Leistung zu versorgen.

3. Straßenfertiger nach Anspruch 1 oder 2, wobei die beiden Schaltgeräte (39) mit einem gemeinsamen Eingang (41) der elektrischen Heizeinrichtung (15) verbunden sind.

4. Straßenfertiger nach einem der vorangehenden Ansprüche, wobei die elektrische Schalteinrichtung (37) an der Einbaubohle (9) vorgesehen ist.

5. Straßenfertiger nach einem der vorangehenden Ansprüche, wobei die beiden Schaltgeräte (39) Halbleiter-Schaltgeräte sind.

6. Straßenfertiger nach einem der vorangehenden Ansprüche, wobei die beiden Schaltgeräte (39) jeweils einen Transistor, einen Thyristor oder eine Zweirichtungs-Thyristordiode umfassen.

7. Straßenfertiger nach einem der vorangehenden Ansprüche, wobei die elektrische Schalteinrichtung (37) dazu konfiguriert ist, die elektrische Heizeinrichtung (15) mit einer Wechselspannung zu versorgen.

8. Straßenfertiger nach Anspruch 7, wobei jedes Schaltgerät (39) dazu konfiguriert ist, zumindest eine komplette Sinuswelle der Wechselspannung am Stück passieren zu lassen.

9. Straßenfertiger nach Anspruch 7 oder 8, wobei die beiden Schaltgeräte (39) dazu konfiguriert sind, aufeinanderfolgende Sinuswellen der Wechselspannung abwechselnd passieren zu lassen.

10. Straßenfertiger nach einem der vorangehenden Ansprüche, wobei die elektrische Heizeinrichtung (15) ein Widerstandsheizelement ist.

11. Verfahren zum Beheizen einer Einbaubohle (9) eines Straßenfertigers (1), umfassend:
Versorgen zumindest eines an der Einbaubohle (9) vorgesehenen elektrischen Widerstandsheizelements (15) mit elektrischer Leistung,
wobei eine elektrische Leistungszufuhr zu dem elektrischen Widerstandsheizelement (15) mit einer elektrischen Schalteinrichtung (37) geschaltet wird,
**dadurch gekennzeichnet, dass**
zwei Schaltgeräte (39) der elektrischen Schalteinrichtung (37) das elektrische Widerstandsheizelement (15) abwechselnd mit elektrischer Leistung versorgen.

12. Verfahren nach Anspruch 11, wobei das elektrische Widerstandsheizelement (15) mit einer Wechselspannung versorgt wird, und wobei eine Frequenz des Umschaltens der Versorgung des elektrischen Widerstandsheizelements (15) zwischen den beiden Schaltgeräten (39) einer Frequenz der elektrischen Wechselspannung entspricht.

13. Verfahren nach Anspruch 11 oder 12, wobei das elektrische Widerstandsheizelement (15) während der abwechselnden Stromversorgung durch die beiden elektrischen Schaltgeräte (39) durchgängig mit elektrischer Leistung versorgt wird.

## Claims

1. Road paver (1), comprising:
a tractor vehicle (3) with a material hopper (5) for receiving paving material; and
a paving screed (9) for compacting paving material,
wherein the paving screed (9) comprises at least one electric heating device (15) for heating the paving screed (9), and
wherein the road paver (1) comprises at least one electric switching assembly (37) configured to switch an electric power supply of the electric heating device (15),
**characterized in that**
the electric switching assembly (37) comprises an electric parallel circuit of two switching devices (39), wherein the electric parallel circuit of the two switching devices (39) forms an electric series circuit with the electric heating device (15).

2. Road paver according to claim 1, wherein the two switching devices (39) are configured to alternately supply electric power to the electric heating device (15).

3. Road paver according to claim 1 or 2, wherein the two switching devices (39) are connected to a common input (41) of the electric heating device (15).

4. Road paver according to one of the preceding claims, wherein the electric switching assembly (37) is provided on the paving screed (9).

5. Road paver according to one of the preceding claims, wherein the two switching devices (39) are semiconductor switching devices.

6. Road finisher according to one of the preceding claims, wherein the two switching devices (39) each comprise a transistor, a thyristor or a bidirectional thyristor diode.

7. Road paver according to one of the preceding claims, wherein the electric switching assembly (37) is configured to supply an AC voltage to the electric heating device (15).

8. Road paver according to claim 7, wherein each switching device (39) is configured to let at least one complete sine wave of the AC voltage pass in one go.

9. Road paver according to claim 7 or 8, wherein the two switching devices (39) are configured to let successive sine waves of the AC voltage pass in an alternating manner.

10. Road paver according to one of the preceding claims, wherein the electric heating device (15) is a resistance heating element.

11. Method for heating a paving screed (9) of a road paver (1), comprising:
supplying electric power to at least one electric resistance heating element (15) provided on the paving screed (9),
wherein an electric power supply to the electric resistance heating element (15) is switched with an electric switching assembly (37),
**characterized in that**
two switching devices (39) of the electric switching assembly (37) alternately supply the electric resistance heating element (15) with electric power.

12. Method according to claim 11, wherein the electric resistance heating element (15) is supplied with an AC voltage, and wherein a frequency of switching the supply of the electric resistance heating element (15) between the two switching devices (39) corresponds to a frequency of the AC voltage.

13. Method according to claim 11 or 12, wherein the electric resistance heating element (15) is continuously supplied with electric power during the alternating power supply by the two electric switching devices (39).

## Revendications

1. Finisseur routier (1), comprenant :
un véhicule tracteur (3) avec une trémie à matériau (5) permettant d'accueillir un matériau d'oeuvre ; et
une table de réglage (9) permettant de compacter le matériau d'oeuvre ;
dans lequel la table de réglage (9) comprend au moins un dispositif de chauffage électrique (15) permettant de chauffer la table de réglage (9), et
dans lequel le finisseur routier (1) comprend au moins un dispositif de commutation électrique (37) configuré pour commuter une alimentation électrique du dispositif de chauffage électrique (15),
**caractérisé en ce que**
le dispositif de commutation électrique (37) comprend un branchement électrique en parallèle de deux appareils de commutation (39), dans lequel le branchement électrique en parallèle des deux appareils de commutation (39) avec le dispositif de chauffage électrique (15) forme un branchement électrique en série.

2. Finisseur routier selon la revendication 1, dans lequel les deux appareils de commutation (39) sont configurés pour alimenter de manière alternée le dispositif de chauffage électrique (15) en énergie électrique.

3. Finisseur routier selon la revendication 1 ou 2, dans lequel les deux appareils de commutation (39) sont reliés à une entrée (41) commune du dispositif de chauffage électrique (15).

4. Finisseur routier selon l'une quelconque des revendications précédentes, dans lequel le dispositif de commutation électrique (37) est fourni au niveau de la table de réglage (9).

5. Finisseur routier selon l'une quelconque des revendications précédentes, dans lequel les deux appareils de commutation (39) sont des appareils de commutation à sem i-conducteurs.

6. Finisseur routier selon l'une quelconque des revendications précédentes, dans lequel les deux appareils de commutation (39) comprennent respectivement un transistor, un thyristor ou une diode thyristor bidirectionnelle.

7. Finisseur routier selon l'une quelconque des revendications précédentes, dans lequel le dispositif de commutation électrique (37) est configuré pour alimenter le dispositif de chauffage électrique (15) en tension alternative.

8. Finisseur routier selon la revendication 7, dans lequel chaque appareil de commutation (39) est configuré pour laisser passer en une seule fois au moins une onde sinusoïdale complète de la tension alternative.

9. Finisseur routier selon la revendication 7 ou 8, dans lequel les deux appareils de commutation (39) sont configurés pour laisser passer de manière alternée des ondes sinusoïdales successives de la tension alternative.

10. Finisseur routier selon l'une quelconque des revendications précédentes, dans lequel le dispositif de chauffage électrique (15) est un élément de chauffage à résistance.

11. Procédé de chauffage d'une table de réglage (9) d'un finisseur routier (1), comprenant l'étape consistant à :
fournir de l'énergie électrique à au moins un élément chauffant à résistance électrique (15) fourni au niveau de la table de réglage (9),
dans lequel une alimentation électrique est commutée à l'élément chauffant à résistance électrique (15) grâce à un dispositif de commutation électrique (37), **caractérisé en ce que**
deux appareils de commutation (39) du dispositif de commutation électrique (37) alimentent de manière alternée l'élément chauffant à résistance électrique (15) en énergie électrique.

12. Procédé selon la revendication 11, dans lequel l'élément chauffant à résistance électrique (15) est alimenté en tension alternative, et dans lequel une fréquence de commutation de l'alimentation de l'élément chauffant à résistance électrique (15) entre les deux appareils de commutation (39) correspond à une fréquence de la tension électrique alternative.

13. Procédé selon la revendication 11 ou 12, dans lequel l'élément de chauffage à résistance électrique (15) est alimenté en permanence en énergie électrique grâce aux deux appareils de commutation électriques (39) pendant l'alimentation électrique alternée.
